# EUROPÄISCHE PATENTANMELDUNG

(11) **EP 0 962 749 A1**
(43) Veröffentlichungstag der Anmeldung: **08.12.1999**
(21) Anmeldenummer: 98108753.9
(22) Anmeldetag: 14.05.1998
(51) Int. Cl.: G01F 1/32, G01F 25/00, G01B 11/12, G01B 11/02

(54) **Verfahren zum Trockenkalibrieren von Wirbel-Durchflussmessern**

(71) Anmelder: Endress + Hauser Flowtec AG, CH-4153 Reinach BL 1 (CH)
(72) Erfinder: Ohle, Frank, 79585 Steinen (DE); Bernet, Walter Dip.- Ing., 79585 Steinen (DE); Maul, Joachim Dipl.-Ing., 79576 Weil am Rhein (DE)
(74) Vertreter: Morstadt, Volker, Dipl.-Ing.

(57) **Zusammenfassung**

Zur Erzielung von Genauigkeiten in der Größenordnung von 0,75% vom Meßwert wird bei diesem Verfahren mittels einer vor dem Meßrohr (2) auf dessen Achse (3) angeordneten hochauflösenden elektronischen Kamera (9) in Strömungsrichtung ein digitalisiertes, zweidimensionales Gesamtbild von der im Bereich des Staukörpers (7) vorhandenen Innenfläche (4) des Meßrohrs, vom Staukörper, von der im Bereich des Staukörpers vorhandenen Innenfläche des Meßrohrs, von den beiden Fixierungszonen (71,72) des Staukörpers und von der Umrißlinie (51) des Einlaufendes (5) erzeugt. Das Gesamtbild wird in drei Teilbilder aufgeteilt. Das erste Teilbild enthält nur Information über das Einlaufende (5) und die Innenfläche (4), das zweite über den Staukörper (7) ohne die Fixierungszonen (71,72) enthält und das dritte nur über die Letzteren. Aus den Verlaufsinformationen und den idealen Verlauf der Fixierungszonen (71,72) charakterizierenden Idealinformationen werden Kreuzkorrellationsinformationen gebildet. In einem Neuronalen Netzwerk (22) werden alle Informationen mit jeweils diesen einzelnen Informationen entsprechenden Standardinformationen, die aus einer Vielzahl von Naßkalibrierungen gewonnen worden sind, zu einer Kalibrierfaktorinformation und/oder zu einer Abmessungsinformation über die geometrischen Abmessungen des kalibrierten Wirbelaufnehmers verarbeitet.

## Beschreibung

Die Erfindung betrifft ein Verfahren zum Trockenkalibrieren von Wirbel-Durchflußaufnehmern, die im folgenden kurz als Wirbelaufnehmer bezeichnet sind.

Die Funktionsweise üblicher Wirbelaufnehmer beruht bekanntlich auf der Ausnutzung von periodischen Druckschwankungen in einer Kármán'schen Wirbelstraße. Diese entsteht, wenn ein Fluid in einem Meßrohr gegen ein Hindernis, insb. einen Staukörper, strömt. Von diesem lösen sich auf seiner stromabwärtigen Seite Wirbel ab, die die erwähnte Wirbelstraße bilden. Die Frequenz der Ablösung der Wirbel ist proportional zum Volumendurchfluß des Fluids.

Ein üblicher Wirbelaufnehmer umfaßt u.a. den erwähnten Staukörper und ein Meßrohr vorgegebener Länge, in dem im Betrieb das zu messende Fluid strömt. Das Meßrohr hat eine Achse, eine Innenfläche, ein Einlaufende, ein Auslaufende, eine zu einer von einem Kunden bestellten Nennweite gehörende lichte Weite und eine dazu passende Stärke seiner Wand.

Der Staukörper hat eine Horizontalquerschnittsfläche mit einer vom Hersteller wählbaren geometrischen Form. Der Staukörper hat ferner ein entlang einer ersten Fixierungszone mit der Wand des Meßrohrs verbundenes erstes Ende und ein entlang einer zweiten Fixierungszone mit der Wand des Meßrohrs verbundenes zweites Ende. Der Staukörper hat auch eine Anströmfläche mit einer ersten und einer zweiten Abreißkante und ist üblicherweise entlang eines Durchmessers des Meßrohrs angeordnet. Der Staukörper kann auch noch weitere Abreißkanten, insb. eine dritte und eine vierte Abreißkante aufweisen.

Schließlich sitzt ein Sensorelement im Staukörper oder ist stromabwärts des Staukörpers von innen an der Wand des Meßrohrs oder von außen an der Wand oder innerhalb der Wand angeordnet. Die vom Sensorelement erzeugten elektrischen Signale werden von einer Auswerte-Elektronik verarbeitet und in üblicher Weise angezeigt und/oder an weitere Elektroniken weitergeleitet.

Charakteristisch für die Staukörper ist, daß sie auf ihrer stromaufwärtigen Seite eine Prallfläche haben, gegen die das Fluid anströmt und an der es "gestaut" wird. Ferner verjüngen sich die Staukörper üblicherweise auf der stromabwärtigen Seite, um mindestens die erste und zweite Abreißkante für das Ablösen der Wirbel zu erhalten und um dieses zu begünstigen.

Die mit den Wirbeln verbundenen Druckschwankungen werden mittels des im Staukörper selbst oder mittels eines stromabwärts von ihm angeordneten Sensorelements, das z.B. kapazitiv, induktiv oder piezoelektrisch wirken, aber auch ein Ultraschallsensor sein kann, festgestellt und in elektrisch verarbeitbare Signale umgewandelt. Diese Signale haben eine Frequenz, die direkt proportional zum Volumendurchfluß im Meßrohr ist.

Allerdings muß aufgrund von Schwankungen der geometrischen Abmessungen von gefertigten Wirbelaufnehmern jeder dieser Wirbelaufnehmer einzeln kalibriert werden, d.h. jedes Exemplar wird in einer Kalibrieranlage mit einem Standardfluid, meistens mit Wasser, ausgemessen. Für diese Kalibrier-Messung hat sich die Bezeichnung Naß-Kalibrierung eingebürgert.

Dies geschieht üblicherweise so, daß mittels der Kalibrieranlage mehrere genau bekannte Durchflußwerte vorgegeben und eingestellt werden und daß für diese "Kalibrierwerte" die vom jeweiligen Wirbelaufnehmer mittels der zugehörigen Auswerte-Elektronik angezeigten Werte erfaßt werden. Aus der Abweichung der erfaßten von den genauen Werten ergibt sich ein für jeden einzelnen Wirbelaufnehmer individueller und ihn charakterisierender Kalibrierfaktor.

Der Kalibrierfaktor wird u.a. dazu benutzt, z.B. in der Auswerte-Elektronik des einzelenen Exemplars eine Verstärkerstufe, deren Verstärkungsfaktor einstellbar ist, so abzugleichen, daß die angezeigten Durchflußwerte aller produzierten Wirbelaufnehmer einander gleich und gleich den oben definierten Kalibrierwerten sind.

Die beschriebene Naß-Kalibrierung ist umständlich, zeitraubend und aufwendig. In der Literatur, vgl. "Bulletin of NRLM", Band 45, 1996, Seiten 174 bis 179, wurde schon der Gedanke dargelegt, die produzierten Wirbelaufnehmer aufgrund von festgestellten mechanischen Abmessungen und aufgrund einer experimentell optimierten Geometrie der einzelnen Staukörper trocken zu kalibrieren. Diese Optimierung besteht darin, diejenige Staukörpergeometrie zu ermitteln, bei der die Abhängigkeit der Strouhal-Zahl von der Reynolds-Zahl möglichst linear ist.

Dieses Verfahren zur Trockenkalibrierung ist jedoch noch nicht genau genug, da Fertigungstoleranzen der Staukörper und anderer Teile der Wirbelaufnahmer unberücksichtigt bleiben. Ferner läßt es dieses Verfahren nicht zu, daß aus anderen Gründen erforderliche Formen von Staukörpern benutzt werden können. Im übrigen lassen sich heutige Genauigkeitsforderungen, die in der Größenordnung von 0,75% vom Meßwert liegen, mit dem vorbeschrieben Verfahren nicht erreichen.

Es ist daher eine Ziel der Erfindung, ein Verfahren zum Trockenkalibrieren anzugeben, das wesentlich genauer als das vorbeschriebene Verfahren ist.

Die Erfindung besteht zur Erreichung dieses Zieles in einem Verfahren zum Trockenkalibrieren von Wirbelaufnehmern, von denen jeder aufweist:
- ein Meßrohr mit einer vorgegebenen Länge und einem Lumen,
   -- in dem im Betrieb ein bezüglich seines Volumendurchflusses zu messendes Fluid strömt und
   -- das eine Achse,
   -- eine Innenfläche,
   -- ein Einlaufende, das mit dem Lumen eine Umrißlinie bildet,
   -- ein Auslaufende,
   -- eine zu einer Nennweite gehörende lichte Weite und
   -- eine zu einem zulässigen Druck des Fluids passende Stärke seiner Wand hat,
- einen Staukörper,
   -- der eine Querschnittsfläche mit einer vom Hersteller wählbaren geometrischen Form hat,
   -- der ein entlang einer ersten Fixierungszone mit der Wand des Meßrohrs verbundenes erstes Ende und
   -- ein entlang einer zweiten Fixierungszone mit der Wand des Meßrohrs verbundenes zweites Ende aufweist,
   -- der eine Anströmfläche mit einer ersten und einer zweiten Abreißkante hat und
   -- der entlang eines Durchmessers des Meßrohrs angeordnet ist, und
- ein Sensorelement,
   -- das im Staukörper sitzt oder
   -- das stromabwärts des Staukörpers von innen an der Wand oder von außen an der Wand oder innerhalb der Wand des Meßrohrs angeordnet ist,
      bei welchen Verfahren
- mittels einer auf der Achse vor den Meßrohr angeordneten hochauflösenden elektronischen Kamera in Strömungsrichtung ein digitalisiertes, zweidimensionales Gesamtbild von der im Bereich des Staukörpers vorhandenen Innenfläche des Meßrohrs, vom Staukörper, von der im Bereich des Staukörpers vorhandenen Innenfläche des Meßrohrs, von den beiden Fixierungszonen und von der Umrißlinie des Einlaufendes erzeugt wird,
- das Gesamtbild in ein erstes, ein zweites und ein drittes Teilbild aufgeteilt wird,
   -- welches erste Teilbild praktisch nur Information über das Einlaufende und die Innenfläche enthält,
   -- welches zweite Teilbild praktisch nur Information über den Staukörper ohne die Fixierungszonen enthält und
   -- welches dritte Teilbild praktisch nur Information über die Fixierungszonen enthält,
- aus dem ersten Teilbild
   -- eine Umrißinformation über die Umrißlinie und
   -- eine erste Flächenfehlstelleninformation - bezüglich der Innenfläche des Meßrohrs - extrahiert wird,
- aus dem zweiten Teilbild
   -- eine erste Kanteninformation über die erste Abreißkante des Staukörpers,
   -- eine zweite Kanteninformation über dessen zweite Abreißkante und
   -- eine zweite Flächenfehlstelleninformation - bezüglich der Anströmfläche des Staukörpers - extrahiert wird,
- aus dem dritten Teilbild
   -- eine erste Verlaufsinformation über die erste Fixierungszone des Staukörpers,
   -- eine zweite Verlaufsinformation über dessen zweite Fixierungszone,
   -- eine dritte Flächenfehlstelleninformation - bezüglich der Fläche der ersten Fixierungszone - und
   -- eine vierte Flächenfehlstelleninformation - bezüglich der Fläche der zweiten Fixierungszone - extrahiert werden,
- aus der ersten und der zweiten Kanteninformation
   -- eine Abstandsinformation und
   -- eine Winkelinformation bezüglich der Abweichung von der Parallelität der Abreißkanten des Staukörpers gebildet wird,
- aus der Abstandsinformation
   -- eine erste Rauhigkeitsinformation bezüglich des nicht exakt geraden Verlaufs der ersten Abreißkante,
   -- eine zweite Rauhigkeitsinformation bezüglich des nicht exakt geraden Verlaufs der zweiten Abreißkante,
   -- eine Mittelwertinformation aller gegenseitigen Abstände der Abreißkanten entlang des Staukörpers,
   -- eine Wichtungsinformation mittels einer für den Betrieb vorgegebene Strömungsprofile des Fluids charakterisierenden Wichtungsfunktion gebildet werden,
- aus der ersten Verlaufsinformation und aus einer den idealen Verlauf der ersten Fixierungszone charakterizierenden ersten Idealinformation eine erste Kreuzkorrellationsinformation und
- aus der zweiten Verlaufsinformation und aus einer den idealen Verlauf der zweiten Fixierungszone charakterizierenden zweiten Idealinformation eine zweite Kreuzkorrellationsinformation gebildet werden und
- in einem Neuronalen Netzwerk
   -- die Umrißinformation,
   -- die erste und die zweite Rauhigkeitsinformation,
   -- die Mittelwertinformation,
   -- die Wichtungsinformation,
   -- die Winkelinformation,
   -- die erste, die zweite, die dritte und die vierte Flächenfehlstelleninformation sowie
   -- die erste und die zweite Kreuzkorrelationsinformation
- mit jeweils diesen einzelnen Informationen entsprechenden Standardinformationen, die aus einer Vielzahl von Naßkalibrierungen gewonnen worden sind, zu
   -- einer Kalibrierfaktorinformation und/oder zu
   -- einer Abmessungsinformation über die geometrischen Abmessungen des kalibrierten Wirbelaufnehmers verarbeitet werden.

Nach einer ersten bevorzugten Weiterbildung der Erfindung werden
- aus der Abstandsinformation eine Standardabweichungsinformation bezüglich aller Abstände zwischen den Abreißkanten des Staukörpers gebildet,
- mittels eines Mehrfach-Komparators
   -- aus der Umrißinformation und einem dafür vorzugebenden Umrißgrenzwert eine Umriß-Vergleichsinformation,
   -- aus der ersten Rauhigkeitsinformation und einem dafür vorzugebenden ersten Rauhigkeitsgrenzwert eine erste Rauhigkeit-Vergleichsinformation,
   -- aus der zweiten Rauhigkeitsinformation und einem dafür vorzugebenden zweiten Rauhigkeitsgrenzwert eine zweite Rauhigkeit-Vergleichsinformation,
   -- aus der Standardabweichungsinformation und einem dafür vorzugebenden Standardabweichungsgrenzwert eine Standardabweichung-Vergleichsinformation,
   -- aus der ersten Kreuzkorrellationsinformation und einem dafür vorzugebenden ersten Kreuzkorrellationsgrenzwert eine erste Kreuzkorrellation-Vergleichsinformation,
   -- aus der zweiten Kreuzkorrellationsinformation und einem dafür vorzugebenden zweiten Kreuzkorrellationsgrenzwert eine zweite Kreuzkorrellation-Vergleichsinformation,
   -- aus der ersten Flächenfehlstelleninformation und einem dafür vorzugebenden ersten Flächenfehlstellengrenzwert eine erste Flächenfehlstellen-Vergleichsinformation,
   -- aus der zweiten Flächenfehlstelleninformation und einem dafür vorzugebenden zweiten Flächenfehlstellengrenzwert eine zweite Flächenfehlstellen-Vergleichsinformation,
   -- aus der dritten Flächenfehlstelleninformationund einem dafür vorzugebenden dritten Flächenfehlstellengrenzwert eine dritte Flächenfehlstellen-Vergleichsinformation sowie
   -- aus der vierten Flächenfehlstelleninformation und einem dafür vorzugebenden vierten Flächenfehlstellengrenzwert eine vierte Flächenfehlstellen-Vergleichsinformation gebildet und
- die Kalibrierfaktorinformation,
- die Abmessungsinformation,
- die Umriß-Vergleichsinformation,
- die erste Rauhigkeit-Vergleichsinformation,
- die zweite Rauhigkeit-Vergleichsinformation,
- die erste Kreuzkorrellation-Vergleichsinformation,
- die zweite Kreuzkorrellation-Vergleichsinformation,
- die erste Flächenfehlstellen-Vergleichsinformation,
- die zweite Flächenfehlstellen-Vergleichsinformation,
- die dritte Flächenfehlstellen-Vergleichsinformation und
- die vierte Flächenfehlstellen-Vergleichsinformation zu einer Qualitätsinformation und/oder einer Qualitätsfaktorinformation verarbeitet.

Nach einer zweiten bevorzugten Weiterbildung der Erfindung, die auch bei der ersten bevorzugten Weiterbildung angewendet werden kann, weist
- der Staukörper zusätzlich zur ersten und zur zweiten eine dritte und eine vierte Abreißkante auf,
- wird aus der Abstandsinformation
   -- eine dritte Rauhigkeitsinformation bezüglich des nicht exakt geraden Verlaufs der dritten Abreißkante,
   -- eine vierte Rauhigkeitsinformation bezüglich des nicht exakt geraden Verlaufs der vierten Abreißkante,
- gebildet und
- werden im Neuronalen Netzwerk auch die dritte und die vierte Rauhigkeitsinformation mit diesen Informationen entsprechenden Standardinformationen, die aus einer Vielzahl von Naßkalibrierungen gewonnen worden sind, zur Kalibrierfaktorinformation und/oder zur Abmessungsinformation verarbeitet.

Ein Vorteil der Erfindung besteht darin, daß die Genauigkeit der Kalibrierung sehr gut ist und in der gewünschten Größenordnung von 0,75% von Meßwert liegt.

Die Erfindung und weitere Vorteile werden nun anhand von Ausführungsbeispielen näher erläutert, die in den Figuren der Zeichnung dargestellt sind, die nicht maßstäblich sind.
- Fig. 1: zeigt schematisch, teilweise aufgeschnitten und perspektivisch in einer Sicht von unten nach oben den Aufbau eines Wirbelaufnehmers,
- Fig. 2: zeigt schematisch, teilweise aufgeschnitten und perspektivisch in einer Sicht von oben nach unten den Wirbelaufnehmer von Fig. 1,
- Fig. 3: zeigt im Längsschnitt die stark schematisierte Anordnung einer hochauflösenden elektronischen Kamera vor dem Einlaufende des Wirbelaufnehmers nach den Fig. 1 und 2, und
- Fig. 4: zeigt in Form eines Blockschaltbilds ein bevorzugtes Ausführungsbeispiel einer Trockenkalibrier-Elektronik zusammen mit einer bevorzugten Weiterbildung für eine Anordnung von Kamera und Wirbelaufnehmer nach Fig. 3,

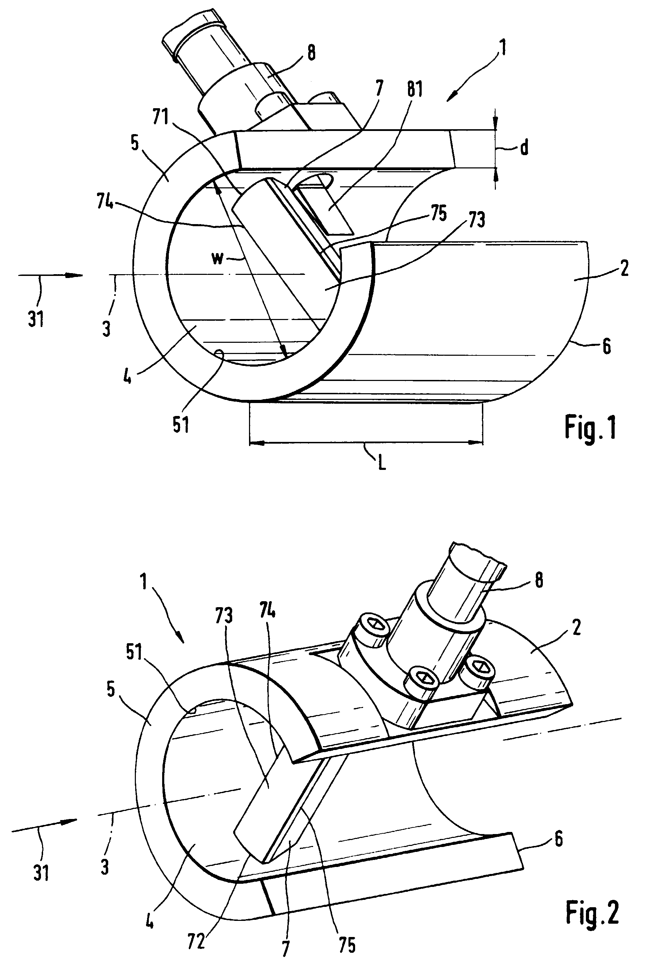

In den Fig. 1 und 2 ist der Aufbau eines Wirbelaufnehmers 1 dargestellt, wie er üblich ist. Damit alle für die Erfindung wichtigen Einzelheiten sichtbar gemacht werden können, sind in den Fig. 1 und 2 perspektivische Darstellungen gewählt, und zwar in Fig. 1 eine Sicht von unten nach oben bzw. in Fig. 2 eine Sicht von oben nach unten.

Der Wirbelaufnehmer 1 umfaßt ein Meßrohr 2 mit vom Hersteller vorgegebener Länge L; darin strömt bei Betrieb ein zu messendes Fluid. Dieses Fluid kann eine Flüssigkeit, ein Gas oder ein Dampf sein. Das Meßrohr 2 besteht üblicherweise aus einem geeigneten Metall, z.B. Edelstahl oder Gußeisen, aber auch ein geeigneter Hart-Kunststoff kann als Material des Meßrohrs 2 dienen.

Das Meßrohr 2 hat eine Achse 3, eine Innenfläche 4, ein Einlaufende 5 und ein Auslaufende 6. Somit ist die Strömungsrichtung des Fluids festgelegt; in den Fig. 1 und 2 ist dies die Richtung von links nach rechts, wie durch den Pfeil 31 veranschaulicht ist.

Das Meßrohr 2 hat ferner eine lichte Weite w und eine dazu passende Stärke d seiner Wand. Diese beiden Werte sind von der Nennweite und dem zulässigen Druck des Fluids der produzierten Wirbelaufnehmer abhängig.

Wenn das Meßrohr 2 einen kreisförmigen Querschnitt hat, wie in den Fig. 1 und 2 vorausgesetzt ist, ist die lichte Weite w der Durchmesser des Lumens des Meßrohrs 2. Mit dem Lumen bildet das Einlaufende eine Umrißlinie 51; diese ist ein üblicherweise Kreis, da das Einlaufende 5 eben ist und in einer Ebene senkrecht zur Achse 3 liegt.

Ein Staukörper 7 hat die räumliche Form eines geraden Prismas mit einer Prismaachse und einer Querschnittsfläche, die eine vom Hersteller zu wählende geometrischen Form aufweist und senkrecht zur Prismaachse ist. In den Fig. 1 und 2 ist diese geometrische Form im wesentlichen ein gleichschenkliges Dreieck. Anstatt eines geraden Prismas sind auch schon gerade Voll- oder Teilzylinder als Staukörper im Stand der Technik beschrieben worden.

Der Staukörper 7 hat ferner ein entlang einer ersten Fixierungszone 71 mit der Innenfläche 4 Wand des Meßrohrs 2 mechanisch fest verbundenes erstes Ende und ein entlang einer zweiten Fixierungszone 72 mit der Innenfläche 4 der Wand des Meßrohrs 2 mechanisch fest verbundenes zweites Ende. Diese mechanisch feste Verbindung wird gewöhnlich durch Schweißen hergestellt, da das Meßrohr 2 meistens aus Stahl besteht.

Der Staukörper 7 hat auch eine Anströmfläche 73 mit einer ersten und einer zweiten Abreißkante 74, 75 und ist üblicherweise entlang eines Durchmessers des Meßrohrs 2 angeordnet. Der Staukörper kann auch noch eine dritte und eine vierte Abreißkante aufweisen.

Schließlich sitzt ein Sensorelement im Staukörper oder ist stromabwärts des Staukörpers von innen an der Wand des Meßrohrs, von außen an der Wand, innerhalb der Wand oder durch die Wand hindurch angeordnet. Das Sensorelement kann z.B. kapazitiv, induktiv oder piezoelektrisch wirken, aber auch ein Ultraschallsensor sein. In den Fig. 1 und 2 ist diejenige Variante dargestellt, bei der ein Sensorelement 8 von außen nach innen durch die Wand geführt ist, das in einem in das Fluid ragenden Paddel 81 endet.

Die mit den Wirbeln verbundenen Druckschwankungen bewegen das Paddel 81 senkrecht zu der in Fig. 1 zu sehenden Fläche hin und her. Wie bereits kurz erwähnt wurde, werden die vom Sensorelement 8 erzeugten elektrischen Signale von der Auswerte-Elektronik verarbeitet und in üblicher Weise angezeigt und/oder weitergeleitet. Die Auswerte-Elektronik ist nicht Gegenstand der Erfindung, so daß auf deren Erläuterung verzichtet wird, zumal im Stand der Technik zahlreiche Auswerte-Elektroniken beschrieben sind.

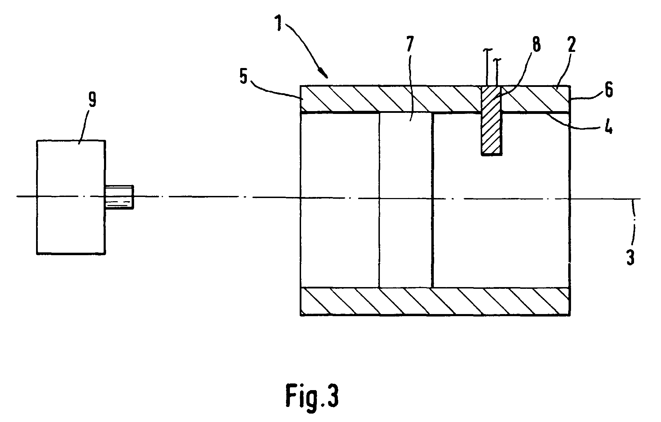

Fig. 3 zeigt schematisch im Längsschnitt die Anordnung einer hochauflösenden elektronischen Kamera 9 vor dem Einlaßende des Wirbelaufnehmers nach den Fig. 1 und 2. In Fig. 3 ist die Kamera 9 räumlich so angeordnet, daß ihre optische Achse 91 mit der Achse 3 des Wirbelaufnehmers zusammenfällt.

Dies ist jedoch nicht zwingend. Die Kamera 9 kann nämlich auch so vor dem Einlaufende 5 positioniert werden, daß die optische Achse 91 und die Achse 3 einen Winkel in einer Ebene bilden, die beide Achsen 3, 91 enthält und die senkrecht zur Prismaachse des Staukörpers 7 ist.

In diesen verschwenkten Positionen der Kamera 9 ist es z.B. möglich, Wirbelaufnehmer trockenzukalibrieren, die einen Staukörper aufweisen, der zusätzlich zur ersten und zur zweiten eine dritte und eine vierte Abreißkante haben. Wie in diesem Fall die Trockenkalibrier-Elektronik weiterzubilden ist, ist weiter unten erläutert.

Die in den verschwenkten Positionen der Kamera 9 erzeugten zweidimensionalen Bilder können ferner bekannten Tomographie-Algorithmen unterworfen werden, wie sie z.B. in dem Buch von F. Mayinger, "Optical Measurements", Berlin 1994, ISBN 3-540-56765-8 bzw. 0-387-56765-8, Kapitel 17, Seiten 371 bis 424 beschrieben sind.

Mit diesen Algorithmen lassen sich Schichtbilder von Ebenen, die senkrecht zur Prismaachse des Staukörpers 7 sind, erzeugen, aus denen dreidimensionale Bilder aufgebaut werden können. Aus diesen werden dann entsprechend der Erfindung wieder Kalibrier- und/oder Qualitätsinformationen generieren.

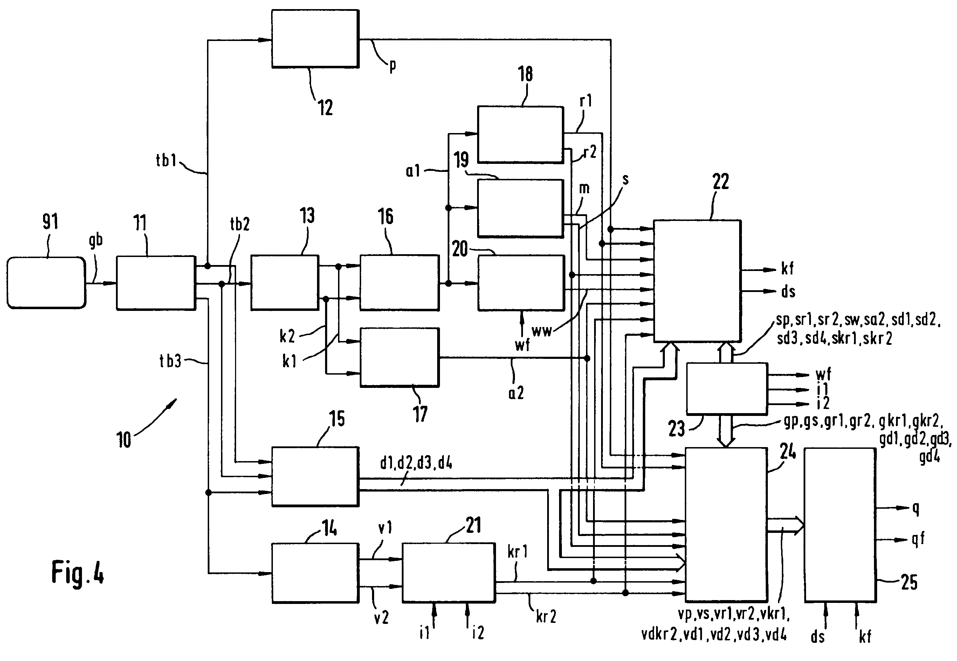

Die Fig. 4 zeigt in Form eines Blockschaltbilds eine bevorzugte Trockenkalibrier-Elektronik 10 zusammen mit einer bevorzugten Weiterbildung entsprechend einer Anordnung von Kamera 9 und Wirbelaufnehmer 1, wie sie in Fig. 3 gezeigt ist. Die Kamera 9 ist in Strömungsrichtung ausgerichtet, und deren Kamera-Elektronik 91 erzeugt in der Form eines Gesamtbild-Signals gb ein digitalisiertes, zweidimensionales Gesamtbild von folgenden Teilbereichen des Wirbelaufnehmers 1: Vom Staukörper 7, von der im Bereich des Staukörpers 7 vorhandenen Innenfläche 4 des Meßrohrs 2, von den beiden Fixierungszonen 71, 72 und von der Umrißlinie 51 des Einlaufendes 5.

Die Trockenkalibrier-Elektronik 10 teilt als erstes das Gesamtbild in ein erstes, ein zweites und ein drittes Teilbild auf, indem sie in einer Segmentierstufe 11 das Gesamtbild-Signal gb in die folgenden Signale aufspaltet: ein erstes Teilbild-Signal tb1, das praktisch nur Information über das Einlaufende 5 und die Innenfläche 4 des Meßrohrs 2 enthält, ein zweites Teilbild-Signal tb2, das praktisch nur Information über den Staukörper 7 ohne die Fixierungszonen 71, 72 enthält, und ein drittes Teilbild-Signal tb3, das praktisch nur Information über die Fixierungszonen 71, 72 enthält.

Die Trockenkalibrier-Elektronik 10 extrahiert aus dem ersten Teilbild eine Umrißinformation über die Umrißlinie 51 des Einlaufendes 5, indem aus dem Teilbild-Signal tb1 in einer Umrißselektiertstufe 12 ein Umriß-Signal p erzeugt wird. Dieses Signal enthält auch eine Information über die lichte Weite w des Meßrohrs 2. Falls erforderlich, kann aus dem Umriß-Signal p ein Signal über die lichte Weite w erzeugt werden.

Die Trockenkalibrier-Elektronik 10 extrahiert aus den zweiten Teilbild eine erste Kanteninformation über die erste Abreißkante 74 des Staukörpers 7 und eine zweite Kanteninformation über dessen zweite Abreißkante 75. Dies erfolgt so, daß aus dem Teilbild-Signal tb2 in einer Abreißkantenselektiertstufe 13 ein erstes Abreißkanten-Signal k1 und ein zweites Abreißkanten-Signal k2 erzeugt werden.

Die Trockenkalibrier-Elektronik 10 extrahiert aus dem dritten Teilbild eine erste Verlaufsinformation über die erste Fixierungszone 71 des Staukörpers 7 und eine zweite Verlaufsinformation über dessen zweite Fixierungszone 72. Dies erfolgt so, daß aus dem Teilbild-Signal tb3 in einer Verlaufselektiertstufe 14 ein erstes Verlauf-Signal v1 und ein zweites Verlauf-Signal v2 erzeugt werden.

Die Trockenkalibrier-Elektronik 10 extrahiert aus dem ersten Teilbild eine die Innenfläche 4 des Meßrohrs 2 betreffende, erste Flächenfehlstellen-Information, aus den zweiten Teilbild eine die Anströmfläche 73 des Staukörpers 7 betreffende, zweite Flächenfehlstellen-Information sowie aus dem dritten Teilbild eine die Fläche der ersten Fixierungszone 71 betreffende dritte, Flächenfehlstellen-Information und eine die Fläche der zweiten Fixierungszone 72 betreffende, vierte Flächenfehlstellen-Information. Dies erfolgt so, daß aus den Teilbild-Signalen tb1, tb2, tb3 in einer Fehlstellendetektierstufe 15 ein erstes, zweites, drittes und viertes Fehlstellen-Signal d1, d2, d3, d4 erzeugt werden.

Die Trockenkalibrier-Elektronik 10 bildet aus der ersten und der zweiten Kanteninformation eine Abstandsinformation und eine Winkelinformation bezüglich der Abweichung von der Parallelität der Kanten des Staukörpers, indem in einer Abstanddetektierstufe 16 aus dem ersten und dem zweiten Abreißkanten-Signal k1 ein Abstand-Signal a1 und in einer Winkeldetektiertstufe 17 ein Winkel-Signal a2 erzeugt werden.

Die Trockenkalibrier-Elektronik 10 bildet aus der Abstandsinformation die folgenden weiteren Einzelinformationen: eine erste Rauhigkeitsinformation bezüglich des nicht exakt geraden Verlaufs der ersten Abreißkante, eine zweite Rauhigkeitsinformation bezüglich des nicht exakt geraden Verlaufs der zweiten Abreißkante, eine Mittelwertinformation aller gegenseitigen Abstände der Abreißkanten entlang des Staukörpers, eine Standardabweichung-Information aller dieser Abstände und eine Wichtungsinformation, der eine Wichtungsfunktion zugrunde gelegt wird, die für im Betrieb auftretende Strömungsprofile des Fluids charakteristisch ist. Es kann z.B. ein turbulentes Strömungsprofil zugrundegelegt werden.

Dies erfolgt so, daß in einer Rauhigkeitsdetektierstufe 18 aus dem Abstand-Signal a1 ein erstes und ein zweites Rauhigkeit-Signal r1, r2 erzeugt werden, daß in einem Mittelwertbildner 19 ein Mittelwert-Signal m sowie ein Standardabweichung-Signal s und daß in einer Wichtungsstufe 20 ein Wichtung-Signal ww erzeugt werden.

Der Wichtungsstufe 20 wird ein Wichtungsfunktion-Signal wf zugeführt, das für die im Betrieb auftretenden oder zu erwartenden Strömungsprofile des Fluids charakteristisch ist. Das Wichtungsfunktion-Signal wf wird aus einem Ensemble von einzelnen Wichtungsfunktion-Signalen durch ein Steuersignal ausgewählt. Das Ensemble ist in einem ersten Bereich eines zur Trockenkalibrier-Elektronik 10 gehörenden Speichers 23 abgelegt und umfaßt alle Wichtungsfunktion-Signale wf, die zu Strömungsprofilen gehören, die im Betrieb des Wirbelaufnehmers 1 auftreten oder zu erwarten sind.

Die Trockenkalibrier-Elektronik 10 bildet aus der ersten Verlaufsinformation und aus einer den idealen Verlauf der ersten Fixierungszone 71 des Staukörpers 7 charakterizierenden ersten Idealinformation eine erste Kreuzkorrellationsinformation und aus der zweiten Verlaufsinformation und aus einer den idealen Verlauf der zweiten Fixierungszone 72 des Staukörpers 7 charakterizierenden zweiten Idealinformation eine zweite Kreuzkorrellationsinformation.

Dies erfolgt so, daß in einer Kreuzkorrellationsstufe 21 aus dem ersten Verlauf-Signal v1 und aus einem den idealen Verlauf der ersten Fixierungszone 71 des Staukörpers 7 charakterizierenden ersten Ideal-Signal i1 ein erstes Kreuzkorrellation-Signals kr1 sowie aus dem zweiten Verlauf-Signal v2 und aus einem den idealen Verlauf der zweiten Fixierungszone 72 des Staukörpers 7 charakterizierenden zweiten Ideal-Signal i2 ein zweites Kreuzkorrellation-Signal kr2 erzeugt werden.

Der Kreuzkorrellationstufe 21 sind die Ideal-Signale i1, i2 zugeführt, die z.B. in einem zweiten Bereich des Speichers 23 abgelegt sind. Die Ideal-Signale i1, i2 können aus dem bekannten Idealverlauf der Fixierzonen 71, 72 berechnet und dann im zweiten Speicherbereich abgelegt werden.

Die Trockenkalibrier-Elektronik 10 verarbeitet in einem Neuronalen Netzwerk 22 die Umrißinformation, die erste und die zweite Rauhigkeitsinformation, die Winkelinformation, die Wichtungsinformation, die erste, die zweite, die dritte und die vierte Flächenfehlstelleninformation sowie die erste und die zweite Kreuzkorrelationsinformation mit jeweils diesen einzelnen Informationen entsprechenden Standardinformationen, die aus einer Vielzahl von Naßkalibrierungen gewonnen worden sind, zu einer Kalibrierfaktorinformation und/oder zu einer Abmessungsinformation über die geometrischen Abmessungen des einzelnen, kalibrierten Wirbelaufnehmers.

Dies erfolgt so, daß dem Neuronalen Netzwerk 22 folgende Signale zugeführt werden: das Umriß-Signal p, die Rauhigkeit-Signale r1, r2, das Wichtung-Signal ww, das Winkel-Signal a2, die Flächenfehlstellen-Signale d1, d2, d3, d4, die Kreuzkorrelation-Signal kr1, kr2 und diesen einzelnen Signalen entsprechende Standard-Signale. Das sind: ein Standard-Umriß-Signal sp, ein erstes und ein zweites Standard-Rauhigkeit-Signal sr1, sr2, ein Standard-Wichtung-Signal sw, ein Standard-Winkel-Signal sa2, ein erstes, ein zweites, ein drittes und ein viertes Standard-Flächenfehlstellen-Signal sd1, sd2, sd3, sd4 sowie ein erstes und ein zweites Standard-Kreuzkorrelation-Signal skr1, skr2.

Die Standard-Signale sp, sr1, sr2, sw, sa2, sd1, sd2, sd3, sd4, skr1, skr2 sind in einem dritten Bereich des Speichers 23 abgelegt und werden aus einer Vielzahl von Naß-Kalibrierungen ermittelt. Dabei müssen für jede zu fertigende Nennweite der Wirbelaufnehmer und für jede vorgesehene Form des Staukörpers entsprechende Standard-Signale ermittelt werden.

Am Ausgang des Neuronalen Netzwerks 22 entsteht ein Kalibrierfaktor-Signal kf und ein Abmessung-Signal ds der geometrischen Abmessungen des einzelnen, kalibrierten Wirbelaufnehmers. Diese Signale können in geeigneter Weise weiterverwendet werden. Hierzu werden sie z.B. in einem nichtflüchtigen, jedoch programmierbarebn Speicher abgelegt. Das Kalibrierfaktor-Signals kf dient dazu, die Auswerte-Elektronik jedes einzelnen Wirbelaufnehmers so einzustellen oder zu programmieren, daß alle gefertigten Wirbelaufnehmer identische Anzeige-Signale für identische Volumen-Durchflußwerte abgeben.

In Fig. 4 ist auch eine bevorzugte Weiterbildung dargestellt. Die Trockenkalibrier-Elektronik 10 ist mit dieser bevorzugten Weiterbildung so erweitert, daß aus der Abstandsinformation eine Standardabweichungsinformation aller Abstände zwischen den Abreißkanten des Staukörpers gebildet wird und daß mittels eines Mehrfach-Komparators 24 aus der Umrißinformation und einem dafür vorzugebenden Umrißgrenzwert eine Umriß-Vergleichsinformation, aus der ersten Rauhigkeitsinformation und einem dafür vorzugebenden ersten Rauhigkeitsgrenzwert eine erste Rauhigkeit-Vergleichsinformation, aus der zweiten Rauhigkeitsinformation und einem dafür vorzugebenden zweiten Rauhigkeitsgrenzwert eine zweite Rauhigkeit-Vergleichsinformation, aus der Standardabweichungsinformation und einem dafür vorzugebenden Standardabweichungsgrenzwert eine Standardabweichung-Vergleichsinformation, aus der ersten Kreuzkorrellationsinformation und einem dafür vorzugebenden ersten Kreuzkorrellationsgrenzwert eine erste Kreuzkorrellation-Vergleichsinformation, aus der zweiten Kreuzkorrellationsinformation und einem dafür vorzugebenden zweiten Kreuzkorrellationsgrenzwert eine zweite Kreuzkorrellation-Vergleichsinformation, aus der ersten Flächenfehlstelleninformation und einem dafür vorzugebenden ersten Flächenfehlstellengrenzwert eine erste Flächenfehlstellen-Vergleichsinformation, aus der zweiten Flächenfehlstelleninformation und einem dafür vorzugebenden zweiten Flächenfehlstellengrenzwert eine zweite Flächenfehlstellen-Vergleichsinformation, aus der dritten Flächenfehlstelleninformation und einem dafür vorzugebenden dritten Flächenfehlstellengrenzwert eine dritte Flächenfehlstellen-Vergleichsinformation sowie aus der vierten Flächenfehlstelleninformation und einem dafür vorzugebenden vierten Flächenfehlstellengrenzwert eine vierte Flächenfehistellen-Vergleichsinformation gebildet werden. Ferner werden die Kalibrierfaktorinformation, die Abmessungsinformation, die erste Rauhigkeit-Vergleichsinformation, die zweite Rauhigkeit-Vergleichsinformation, die Umriß-Vergleichsinformation, die Mittelwert-Vergleichsinformation, die erste Kreuzkorrellation-Vergleichsinformation, die zweite Kreuzkorrellation-Vergleichsinformation, die erste Flächenfehlstellen-Vergleichsinformation, die zweite Flächenfehlstellen-Vergleichsinformation, die dritte Flächenfehlstellen-Vergleichsinformation und die vierte Flächenfehlstellen-Vergleichsinformation zu einer Qualitätsfaktorinformation und/oder einer Qualitätsinformation verarbeitet.

Dies erfolgt so, daß der Mittelwertbildner 19 aus dem Abstand-Signal a1 ein Standardabweichung-Signal s aller Abstände zwischen den Abreißkanten des Staukörpers 7 erzeugt. Ferner sind dem Mehrfach-Komparator 24 zugeführt: das Umriß-Signal p und ein dafür vorzugebendes Umrißgrenzwert-Signal gp, das erste Rauhigkeit-Signal r1 und ein dafür vorzugebendes erstes Rauhigkeitsgrenzwert-Signal gr1, das zweite Rauhigkeit-Signal r2 und ein dafür vorzugebendes zweites Rauhigkeitsgrenzwert-Signal gr2, das Standardabweichung-Signal s und ein dafür vorzugebendes Standardabweichungsgrenzwert-Signal gs, das erste Kreuzkorrellation-Signal kr1 und ein dafür vorzugebendes erstes Kreuzkorrellationsgrenzwert-Signal gkr1, das zweite Kreuzkorrellation-Signal kr2 und ein dafür vorzugebendes zweites Kreuzkorrellationsgrenzwert-Signal gkr2, das erste Flächenfehlstellen-Signal d1 und ein dafür vorzugebendes erstes Flächenfehlstellengrenzwert-Signal gd1, das zweite Flächenfehlstellen-Signal d2 und ein dafür vorzugebendes zweites Flächenfehlstellengrenzwert-Signal gd2, das dritte Flächenfehlstellen-Signal d3 und ein dafür vorzugebendes drittes Flächenfehlstellengrenzwert-Signal gd3, das vierte Flächenfehlstellen-Signal d4 und ein dafür vorzugebendes viertes Flächenfehlstellengrenzwert-Signal gd4.

Der Mehrfach-Komparator 24 erzeugt aus den Signalpaaren g, gp; s, gs; r1, gr1; r2, gr2; kr1, gkr1; kr2, gkr2; d1, gd1; d2, gd2; d3, gd3; d4, gd4 ein zu jedem Signalpaar gehörendes Vergleichssignal; dies sind: ein Umriß-Vergleichssignal vp, ein Standardabweichung-Vergleichssignal vs, ein erstes Rauhigkeit-Vergleichssignal vr1, ein zweites Rauhigkeit-Vergleichssignal vr2, ein erstes Kreuzkorrellation-Vergleichssignal vkr1, ein zweites Kreuzkorrellation-Vergleichssignal vkr2, ein erstes Flächenfehlstellen-Vergleichssignal vd1, ein zweites Flächenfehlstellen-Vergleichssignal vd2, ein drittes Flächenfehlstellen-Vergleichssignal vd3 und ein viertes Flächenfehlstellen-Vergleichssignal vd4.

Schließlich werden die folgenden Signale einem Mikroprozessor 25 zugeführt: das Kalibrierfaktor-Signal kf, das Abmessung-Signal ds, das Umriß-Vergleichssignal vp, das Standardabweichung-Vergleichssignal vs, das erste Rauhigkeit-Vergleichssignal vr1, das zweite Rauhigkeit-Vergleichssignal vr2, das erste Kreuzkorrellation-Vergleichssignal vkr1, das zweite Kreuzkorrellation-Vergleichssignal vkr2, das erste Flächenfehlstellen-Vergleichssignal vd1, das zweite Flächenfehlstellen-Vergleichssignal vd2, das dritte Flächenfehlstellen-Vergleichssignal vd3 und das vierte Flächenfehlstellen-Vergleichssignal vd4.

Der Mikroprozessor 25 verarbeitet diese ihm zugeführten Signale zu einem Qualitätsfaktor-Signal qf und/oder einem Qualitäts-Signal q. Diese Signale werden in geeigneter Weise bei der Messung und Prüfung jedes einzelnen gefertigten Wirbelaufnehmers weiterverwendet. Die Signale q, qf dienen dazu, außerhalb der genannten Grenzwerte liegende Exemplare auszuscheiden, da sie unbrauchbar sind.

## Patentansprüche

1. Verfahren zum Trockenkalibrieren von Wirbel-Durchflußaufnehmern (1) (im folgenden kurz als Wirbelaufnehmer bezeichnet), von denen jeder aufweist:
- ein Meßrohr (2) mit einer vorgegebenen Länge und einem Lumen,
-- in dem im Betrieb ein bezüglich seines Volumendurchflusses zu messendes Fluid strömt und
-- das eine Achse (3),
-- eine Innenfläche (4),
-- ein Einlaufende (5), das mit dem Lumen eine Umrißlinie (51) bildet,
-- ein Auslaufende (6),
-- eine zu einer Nennweite gehörende lichte Weite (w) und
-- eine zu einem zulässigen Druck des Fluids passende Stärke (d) seiner Wand hat,
- einen Staukörper (7),
-- der eine Querschnittsfläche mit einer vom Hersteller wählbaren geometrischen Form hat,
-- der ein entlang einer ersten Fixierungszone (71) mit der Wand des Meßrohrs verbundenes erstes Ende und
-- ein entlang einer zweiten Fixierungszone (72) mit der Wand des Meßrohrs verbundenes zweites Ende aufweist,
-- der eine Anströmfläche (73) mit einer ersten und einer zweiten Abreißkante (74, 75) hat und
-- der entlang eines Durchmessers des Meßrohrs angeordnet ist, und
- ein Sensorelement (8),
-- das im Staukörper sitzt oder
-- das stromabwärts des Staukörpers von innen an der Wand oder von außen an der Wand oder innerhalb der Wand des Meßrohrs angeordnet ist,
bei welchem Verfahren
- mittels einer auf der Achse (3) vor dem Meßrohr (2) angeordneten hochauflösenden elektronischen Kamera (9) in Strömungsrichtung ein digitalisiertes, zweidimensionales Gesamtbild von der im Bereich des Staukörpers (7) vorhandenen Innenfläche (4) des Meßrohrs, vom Staukörper, von der im Bereich des Staukörpers vorhandenen Innenfläche des Meßrohrs, von den beiden Fixierungszonen (71, 72) und von der Umrißlinie (51) des Einlaufendes (5) erzeugt wird,
- das Gesamtbild in ein erstes, ein zweites und ein drittes Teilbild aufgeteilt wird,
-- welches erste Teilbild praktisch nur Information über das Einlaufende (5) und die Innenfläche (4) enthält,
-- welches zweite Teilbild praktisch nur Information über den Staukörper (7) ohne die Fixierungszonen (71, 72) enthält und
-- welches dritte Teilbild praktisch nur Information über die Fixierungszonen (71, 72) enthält,
- aus dem ersten Teilbild
-- eine Umrißinformation über die Umrißlinie (51) und
-- eine erste Flächenfehlstelleninformation - bezüglich der Innenfläche (4) des Meßrohrs - extrahiert wird,
- aus dem zweiten Teilbild
-- eine erste Kanteninformation über die erste Abreißkante (74) des Staukörpers,
-- eine zweite Kanteninformation über dessen zweite Abreißkante (75) und
-- eine zweite Flächenfehlstelleninformation - bezüglich der Anströmfläche (73) des Staukörpers - extrahiert wird,
- aus dem dritten Teilbild
-- eine erste Verlaufsinformation über die erste Fixierungszone (71) des Staukörpers,
-- eine zweite Verlaufsinformation über dessen zweite Fixierungszone (72),
-- eine dritte Flächenfehlstelleninformation - bezüglich der Fläche der ersten Fixierungszone (71) - und
-- eine vierte Flächenfehlstelleninformation - bezüglich der Fläche der zweiten Fixierungszone (72) - extrahiert werden,
- aus der ersten und der zweiten Kanteninformation
-- eine Abstandsinformation und
-- eine Winkelinformation bezüglich der Abweichung von der Parallelität der Abreißkanten (74, 75) des Staukörpers gebildet wird,
- aus der Abstandsinformation
-- eine erste Rauhigkeitsinformation bezüglich des nicht exakt geraden Verlaufs der ersten Abreißkante,
-- eine zweite Rauhigkeitsinformation bezüglich des nicht exakt geraden Verlaufs der zweiten Abreißkante,
-- eine Mittelwertinformation aller gegenseitigen Abstände der Abreißkanten entlang des Staukörpers,
-- eine Wichtungsinformation mittels einer für den Betrieb vorgegebene Strömungsprofile des Fluids charakterisierenden Wichtungsfunktion gebildet werden,
- aus der ersten Verlaufsinformation und aus einer den idealen Verlauf der ersten Fixierungszone (71) charakterizierenden ersten Idealinformation eine erste Kreuzkorrellationsinformation und
- aus der zweiten Verlaufsinformation und aus einer den idealen Verlauf der zweiten Fixierungszone (72) charakterizierenden zweiten Idealinformation eine zweite Kreuzkorrellationsinformation gebildet werden und
- in einem Neuronalen Netzwerk (22)
-- die Umrißinformation,
-- die erste und die zweite Rauhigkeitsinformation,
-- die Mittelwertinformation,
-- die Wichtungsinformation,
-- die Winkelinformation,
-- die erste, die zweite, die dritte und die vierte Flächenfehlstelleninformation sowie
-- die erste und die zweite Kreuzkorrelationsinformation
- mit jeweils diesen einzelnen Informationen entsprechenden Standardinformationen, die aus einer Vielzahl von Naßkalibrierungen gewonnen worden sind, zu
-- einer Kalibrierfaktorinformation und/oder zu
-- einer Abmessungsinformation über die geometrischen Abmessungen des kalibrierten Wirbelaufnehmers verarbeitet werden.

2. Verfahren nach Anspruch 1, bei dem
- aus der Abstandsinformation eine Standardabweichungsinformation bezüglich aller Abstände zwischen den Abreißkanten (74, 75) des Staukörpers gebildet wird,
- mittels eines Mehrfach-Komparators (24)
-- aus der Umrißinformation und einem dafür vorzugebenden Umrißgrenzwert eine Umriß-Vergleichsinformation,
-- aus der ersten Rauhigkeitsinformation und einem dafür vorzugebenden ersten Rauhigkeitsgrenzwert eine erste Rauhigkeit-Vergleichsinformation,
-- aus der zweiten Rauhigkeitsinformation und einem dafür vorzugebenden zweiten Rauhigkeitsgrenzwert eine zweite Rauhigkeit-Vergleichsinformation,
-- aus der Standardabweichungsinformation und einem dafür vorzugebenden Standardabweichungsgrenzwert eine Standardabweichung-Vergleichsinformation,
-- aus der ersten Kreuzkorrellationsinformation und einem dafür vorzugebenden ersten Kreuzkorrellationsgrenzwert eine erste Kreuzkorrellation-Vergleichsinformation,
-- aus der zweiten Kreuzkorrellationsinformation und einem dafür vorzugebenden zweiten Kreuzkorrellationsgrenzwert eine zweite Kreuzkorrellation-Vergleichsinformation,
-- aus der ersten Flächenfehlstelleninformation und einem dafür vorzugebenden ersten Flächenfehlstellengrenzwert eine erste Flächenfehlstellen-Vergleichsinformation,
-- aus der zweiten Flächenfehlstelleninformation und einem dafür vorzugebenden zweiten Flächenfehlstellengrenzwert eine zweite Flächenfehlstellen-Vergleichsinformation,
-- aus der dritten Flächenfehlstelleninformation und einem dafür vorzugebenden dritten Flächenfehlstellengrenzwert eine dritte Flächenfehlstellen-Vergleichsinformation sowie
-- aus der vierten Flächenfehlstelleninformation und einem dafür vorzugebenden vierten Flächenfehlstellengrenzwert eine vierte Flächenfehlstellen-Vergleichsinformation gebildet werden und
- die Kalibrierfaktorinformation,
- die Abmessungsinformation,
- die Umriß-Vergleichsinformation,
- die Standardabweichung-Vergleichsinformation,
- die erste Rauhigkeit-Vergleichsinformation,
- die zweite Rauhigkeit-Vergleichsinformation,
- die erste Kreuzkorrellation-Vergleichsinformation,
- die zweite Kreuzkorrellation-Vergleichsinformation,
- die erste Flächenfehlstellen-Vergleichsinformation,
- die zweite Flächenfehlstellen-Vergleichsinformation,
- die dritte Flächenfehlstellen-Vergleichsinformation und
- die vierte Flächenfehlstellen-Vergleichsinformation zu einer Qualitätsinformation und/oder einer Qualitätsfaktorinformation verarbeitet werden.

3. Verfahren nach Anspruch 1 oder 2, bei dem
- der Staukörper (7) zusätzlich zur ersten und zur zweiten eine dritte und eine vierte Abreißkante aufweist,
- aus der Abstandsinformation
-- eine dritte Rauhigkeitsinformation bezüglich des nicht exakt geraden Verlaufs der dritten Abreißkante,
-- eine vierte Rauhigkeitsinformation bezüglich des nicht exakt geraden Verlaufs der vierten Abreißkante,
- gebildet wird und
- im Neuronalen Netzwerk (22) auch die dritte und die vierte Rauhigkeitsinformation mit diesen Informationen entsprechenden Standardinformationen, die aus einer Vielzahl von Naßkalibrierungen gewonnen worden sind, zur Kalibrierfaktorinformation und/oder zur Abmessungsinformation verarbeitet werden.
